# FASCICULE DE BREVET EUROPEEN

(11) **EP 4 440 911 B1**
(45) Date de publication et mention de la délivrance du brevet: **10.09.2025**
(21) Numéro de dépôt: 23703266.9
(22) Date de dépôt: 06.01.2023
(51) Int. Cl.: B62J 9/24, B62J 9/27, B62J 7/08

(54) **DISPOSITIF POUR LA FIXATION AMOVIBLE D'UN ACCESSOIRE SUR UN VÉHICULE LÉGER**
VORRICHTUNG ZUR LÖSBAREN BEFESTIGUNG EINES ZUBEHÖRTEILS AN EINEM LEICHTEN FAHRZEUG
DEVICE FOR REMOVABLE ATTACHMENT OF AN ACCESSORY TO A LIGHT VEHICLE

(30) Priorité: 17.01.2022 FR 2200378
(43) Date de publication de la demande: 09.10.2024
(73) Titulaire: LIF (Lab), 13120 Gardanne (FR); Lepage, Charlotte, 13120 Gardanne (FR); Barbaroux, Jean-Baptiste, 13120 Gardanne (FR)
(72) Inventeur: LANZ, Mathieu, 58000 Nevers (FR); POTHET, Emilien, 58600 Garchizy (FR); LEPAGE, Charlotte, 13120 Gardanne (FR); BARBAROUX, Jean-Baptiste, 13120 Gardanne (FR)
(74) Mandataire: Cabinet Beau de Loménie
(86) Numéro de dépôt international: PCT/FR2023/050017
(87) Numéro de publication internationale: WO 2023/135382

(56) Documents cités:
- WO-A1-2009/030139
- DE-A1- 102006 018 237
- FR-A1- 3 010 692
- JP-A- 2010 064 729
- US-A1- 2020 055 559

## Description

### Domaine Technique

La présente invention se rapporte au domaine général des véhicules légers notamment à celui des vélos. Elle concerne plus précisément un dispositif permettant de fixer de façon amovible un accessoire sur le porte-bagage d'un tel véhicule ou directement sur celui-ci.

### Technique antérieure

Le transport d'accessoires (tels qu'un bagage, un panier, un siège enfant, etc.) sur un vélo est typiquement réalisé par l'intermédiaire du porte-bagage de celui-ci (le porte-bagage pouvant être à l'avant ou à l'arrière du vélo).

L'une des solutions connues pour positionner et fixer de façon amovible l'accessoire à transporter sur le porte-bagage d'un vélo consiste à recourir à des sangles, des cordes, ou encore des tendeurs (type sandow).

Ce dispositif de fixation présente cependant de nombreux inconvénients. Il peut notamment être rendu complexe du fait de la taille, de la forme et/ou du poids de l'accessoire à transporter. Ce dispositif est par ailleurs peu sécurisé, long et fastidieux à mettre en œuvre, aussi bien lors du chargement de l'accessoire sur le porte-bagage que lors de son déchargement. En particulier, le temps de mise en place de l'accessoire rend une telle méthode particulièrement inefficiente dans un contexte de chargements/déchargements quotidiens, voire dans un contexte de changement régulier d'accessoires différents pour adapter au mieux la configuration du vélo aux différents besoins rencontrés dans la journée.

Différents autres dispositifs de fixation ont été élaborés afin de simplifier et réduire le temps nécessaire au chargement/déchargement de l'accessoire à transporter. Certains de ces dispositifs mettent ainsi en œuvre une embase de fixation qui est montée et fixée sur le porte-bagage du vélo et sur laquelle vient s'assembler de façon amovible l'accessoire à transporter (par exemple un panier ou un siège pour enfant).

On pourra par exemple citer les publications FR 3,010,692, DE 20 2020 0000 129 U1 et WO 2021/063432 qui divulguent des systèmes pour la fixation de sacs sur un porte-bagage munis notamment d'éléments de fixation amovibles de type griffes pour saisir des tubes du porte-bagage. On pourra également citer la publication JP 4041666 qui décrit un système à embase dans lequel la fixation de l'accessoire sur le porte-bagage du vélo s'effectue par emboîtement de formes. On pourra encore citer la publication CN 103552629 qui présente un système d'embase pour la fixation d'un conteneur dans lequel la fixation est obtenue au moyen d'une fente d'assemblage et d'un bras intégré qui pivote dans la fente d'assemblage. La publication susmentionnée FR 3,010,692 divulgue un dispositif pour la fixation amovible d'un accessoire sur un véhicule léger selon le préambule de la revendication 1.

Bien qu'ils facilitent et accélèrent le chargement/déchargement de l'accessoire à transporter, ces dispositifs de fixation à embase présentent néanmoins plusieurs inconvénients. L'un des inconvénients principaux de ces dispositifs réside dans l'absence d'auto-centrage de l'accessoire lors de son chargement, ce qui nécessite une grande précision de la part de l'utilisateur pour correctement fixer l'accessoire. Le mécanisme est ainsi peu pratique notamment dans le cas de charges lourdes et/ou volumineuses à transporter.

De plus, ces dispositifs présentent généralement l'inconvénient de nécessiter lors du chargement une succession de mouvements selon différents axes (vertical et horizontal) afin de pré-positionner correctement l'accessoire avant sa fixation sur l'embase. Or, une telle combinaison de mouvements complexifie considérablement le chargement et la composante horizontale de ces mouvements, dans le sens de l'arrière vers l'avant, déstabilise le vélo, ce qui rend le chargement d'accessoires lourds et encombrants particulièrement difficile voire dangereux.

D'autres de ces dispositifs présentent un chargement de l'accessoire qui nécessite un mouvement uniquement dans le sens horizontal, ce qui déstabilise également le vélo, même lorsqu'il repose sur sa béquille. En effet, une main doit maintenir le vélo en position et l'autre l'accessoire à charger pour permettre un rapprochement des deux et le verrouillage du système.

En outre, la plupart de ces dispositifs de fixation ne permettent pas une reprise des jeux lors de la fixation de l'accessoire, ce qui peut rendre le transport inconfortable, voire dangereux, pour les charges lourdes et peut générer une usure accélérée des mécanismes.

### Exposé de l'invention

L'invention a donc pour objet un dispositif de fixation qui ne présente pas les inconvénients précités.

Conformément à l'invention, ce but est atteint grâce à un dispositif pour la fixation amovible d'un accessoire sur un véhicule léger, comprenant une plaque destinée à être solidaire du véhicule et une autre plaque sur laquelle est destiné à être solidarisé l'accessoire, les plaques étant aptes à être fixées l'une sur l'autre de façon amovible,
- l'une des plaques dite plaque femelle comprenant
   o au moins deux guides latéraux de centrage positionnés en saillie sur une face d'emboîtement de la plaque le long de deux premiers côtés opposés de celle-ci, les guides latéraux étant chacun muni d'un plan incliné de façon à définir avec la face d'emboîtement de la plaque un profil d'emboîtement femelle, et
- l'autre plaque dite plaque mâle comprenant :
   o au moins deux plans inclinés formés le long de premiers côtés opposés de la plaque de façon à former avec une face d'emboîtement de la plaque un profil d'emboîtement mâle apte à coopérer avec le profil d'emboîtement femelle de la plaque femelle, chaque plan incliné étant apte à coopérer avec un plan incliné des guides latéraux de centrage de la plaque femelle ;
- le dispositif comprenant en outre un système de centrage et de verrouillage mécanique et automatique comprenant :
   o au moins deux organes de centrage et verrouillage comprenant chacun une surface plane et positionnés le long de seconds côtés de l'une et/ou de l'autre plaque et dont au moins l'un est mobile entre une position de verrouillage dans laquelle les plaques sont verrouillées l'une sur l'autre avec suppression des jeux et une position de déverrouillage dans laquelle les plaques sont déverrouillées l'une de l'autre, l'organe de centrage et verrouillage mobile étant contraint en position de verrouillage en l'absence d'intervention extérieure ; et
   o au moins deux plans inclinés formés le long de seconds côtés de l'une et/ou de l'autre plaque et aptes chacun à coopérer par contact avec la surface plane de l'organe de centrage et verrouillage associé de façon à assurer de façon concomitante un centrage et un verrouillage des plaques entre elles, la surface plane de l'organe de centrage et verrouillage mobile étant découplée du plan incliné associé lorsque l'organe de centrage et verrouillage mobile est en position de déverrouillage.

Le dispositif selon l'invention est remarquable notamment en ce qu'il prévoit que les plaques mâle et femelle coopèrent entre elles par un emboîtement de formes complémentaires. En particulier, seule l'une des deux plaques est pourvue d'éléments mécanisés, tandis que l'autre plaque en est dépourvue. Le centrage des plaques entre elles (selon les axes de roulis, tangage et lacet) est assuré grâce aux guides latéraux de centrage et grâce au système de centrage et de verrouillage mécanique et automatique. Cet emboîtement des plaques entre elles induit un auto-centrage lors du chargement de l'accessoire sur le porte-bagage, ce qui permet d'assurer un chargement à l'aveugle de l'accessoire. Ainsi, les éléments constitutifs du système de centrage et de verrouillage remplissent les deux fonctions (centrage et verrouillage) de façon concomitante. De plus, le chargement et le déchargement de l'accessoire s'effectue selon un unique mouvement vertical et peut être réalisé d'une seule main sans déstabiliser le vélo. Le chargement de l'accessoire s'en trouve grandement facilité. Il est par ailleurs sécurisé du fait de la présence du système de verrouillage automatique et mécanique qui assure un verrouillage purement mécanique des plaques entre elles avec reprise et/ou suppression des jeux. De la sorte, le dispositif selon l'invention permet d'apporter une solution unique à l'ensemble des inconvénients précités de l'art antérieur.

De plus, les organes de centrage et verrouillage participent activement et directement au verrouillage des plaques entre elles mais également au centrage. Par ailleurs, ces organes de centrage et verrouillage peuvent être actionnables directement sans avoir besoin de recourir à une commande spécifique.

Les plans inclinés des guides latéraux de la plaque femelle peuvent former chacun un angle obtus avec la face d'emboîtement de la plaque femelle et les plans inclinés de la plaque mâle peuvent former chacun un angle obtus avec la face d'emboîtement de la plaque mâle.

De même, chaque plan incliné du système de centrage et de verrouillage automatique et mécanique peut former un angle obtus avec la face d'emboîtement de la plaque sur laquelle il est formé.

Dans un mode de réalisation, chaque plaque présente une forme sensiblement rectangulaire avec deux grands côtés destinés à être positionnés selon un axe principal du véhicule, les guides latéraux de la plaque femelle étant positionnés parallèlement aux grands côtés ou aux petits côtés de ladite plaque femelle, et les organes de centrage et verrouillage étant positionnés parallèlement aux autres côtés de l'une et/ou de l'autre plaque.

Le système de centrage et de verrouillage automatique peut comprendre deux organes de centrage et verrouillage mobiles positionnés le long des seconds côtés opposés de l'une et/ou de l'autre plaque, chaque organe de centrage et verrouillage étant monté sur ressort réglé de façon à le maintenir en position de verrouillage lorsque le ressort est au repos.

Dans ce cas, les deux organes de centrage et verrouillage mobiles sont avantageusement reliés mécaniquement l'un à l'autre de façon à ce que l'actionnement manuel de l'un des organes de centrage et verrouillage entraîne l'actionnement de l'autre organe de verrouillage.

La plaque mâle peut être destinée à être montée sur un porte-bagage du véhicule et la plaque femelle être destinée à recevoir l'accessoire. Alternativement, l'une des plaques peut faire partie intégrante du porte-bagage du véhicule et/ou l'autre plaque peut faire partie intégrante de l'accessoire.

De préférence, la plaque destinée à être solidaire du porte-bagage du véhicule comprend en outre des moyens de fixation sur le véhicule, ces moyens de fixation comprenant au moins un groupe de pattes destinées à coopérer avec des tubes du véhicule et montées sous une face de la plaque opposée à sa face d'emboîtement, le groupe de pattes comprenant deux pattes positionnées sur des premiers côtés opposés de la plaque et reliées entre elles par une vis permettant de régler l'écartement entre les pattes, chaque patte étant actionnable par l'intermédiaire d'une vis accessible depuis la face d'emboîtement de la plaque.

Dans ce cas, les pattes des moyens de fixation de la plaque peuvent comprendre en outre des moyens pour permettre la fixation d'autres accessoires sur la plaque.

De préférence également, le système de centrage et de verrouillage automatique et mécanique comprend en outre un loquet qui est apte à bloquer et contraindre le ou les organes de centrage et verrouillage en position de verrouillage.

### Brève description des dessins

[Fig. 1A-1B] La figure 1A et la figure 1B sont des vues en perspective, respectivement de la face supérieure et de la face d'emboîtement, d'une plaque femelle selon un mode de réalisation du dispositif selon l'invention.
[Fig. 2A-2B] La figure 2A et la figure 2B sont des vues en perspective, respectivement de la face supérieure et de la face d'emboîtement, d'une plaque mâle apte à coopérer avec la plaque femelle des figures 1A et 1B.
[Fig. 3] La figure 3 est une vue en coupe longitudinale des plaques des figures 1A, 1B, 2A et 2B fixées l'une sur l'autre.
[Fig. 4] La figure 4 est une vue en perspective de la face d'emboîtement d'un d'une plaque femelle selon un autre mode de réalisation du dispositif selon l'invention.
[Fig. 5A-5B] La figure 5A et la figure 5B sont des vues en perspective, respectivement de la face supérieure et de la face inférieure, d'un dispositif selon l'invention dans lequel la plaque mâle fait partie intégrante du porte-bagage du vélo.

### Description des modes de réalisation

L'invention est relative à un dispositif de fixation amovible d'un accessoire sur un vélo, et plus généralement sur un véhicule. Par « véhicule », on entend ici tout véhicule léger, terrestre ou non, motorisé ou non - à l'exception des automobiles. Par « accessoire », on entend ici tous les produits à transporter qui permettent aux utilisateurs du véhicule de se faciliter la vie au quotidien, par exemple un bagage, un panier, un siège enfant, etc. L'accessoire peut notamment être le châssis d'une poussette pour enfant convertible en siège de vélo pour enfant. Le dispositif peut être fixé sur un porte-bagage du véhicule ou directement sur celui-ci par l'intermédiaire notamment d'un appendice se fixant à un élément du véhicule (potence de selle, tube, etc.).

Le dispositif selon l'invention permet d'assurer un chargement et un déchargement sécurisés de l'accessoire à transporter au moyen d'une fixation amovible de celui-ci sur le véhicule.

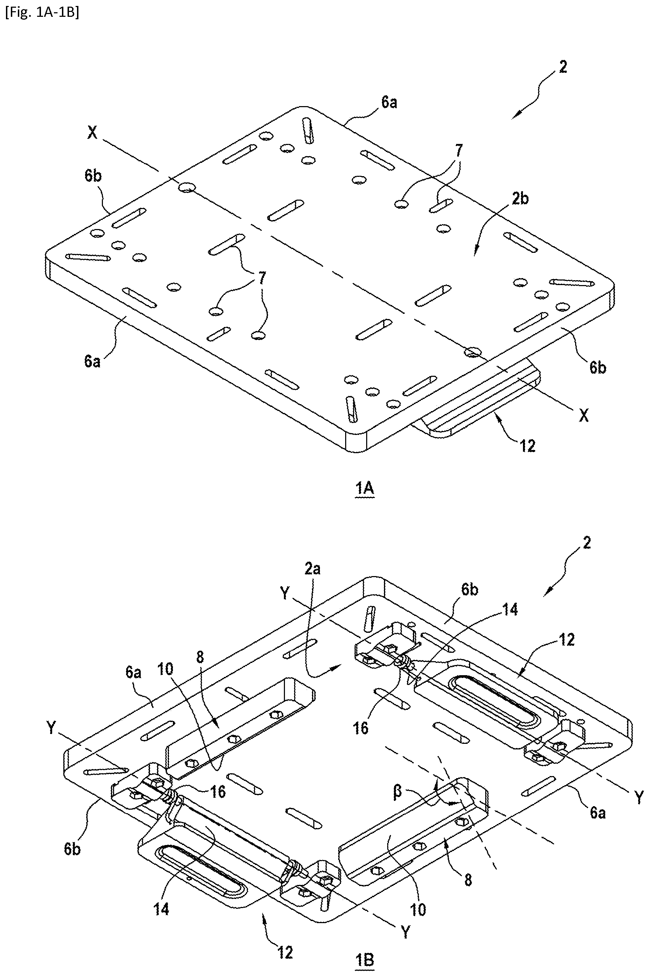

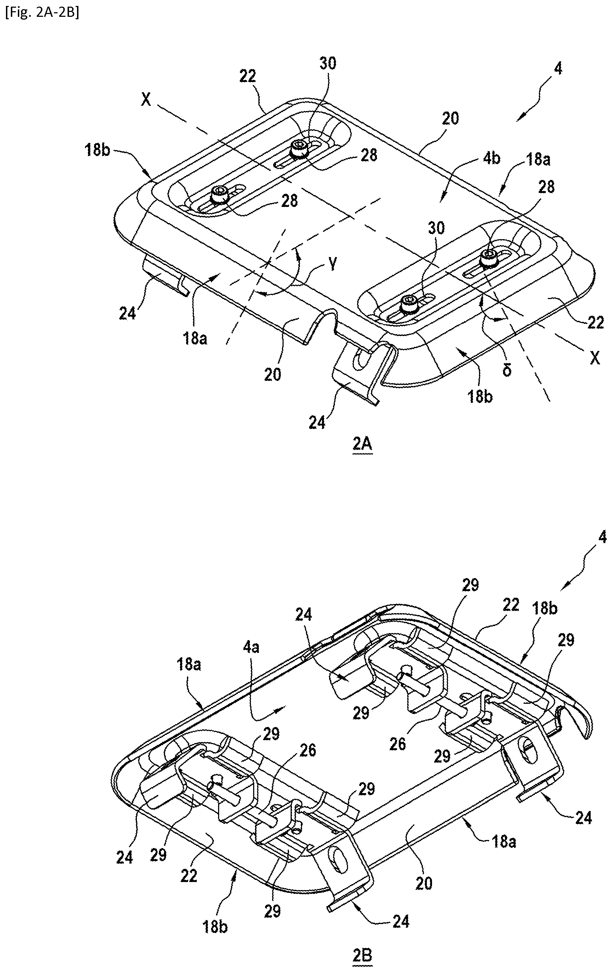

Le dispositif selon l'invention comprend notamment une plaque femelle 2 (telle que celle représentée sur les figures 1A et 1B) et une plaque mâle 4 (telle que celle représentée sur les figures 2A et 2B) qui sont aptes à être fixées l'une sur l'autre de façon amovible.

L'une de ces deux plaques est destinée à être solidaire du véhicule et l'autre plaque est destinée à être solidarisée à l'accessoire à transporter.

Dans l'exemple de réalisation des figures 1A-1B, 2A-2B, 3 et 4, la plaque femelle 2 est destinée à recevoir l'accessoire à transporter, et la plaque mâle 4 est destinée à être montée sur un porte-bagage du véhicule. Bien entendu, la configuration inverse est tout à fait envisageable.

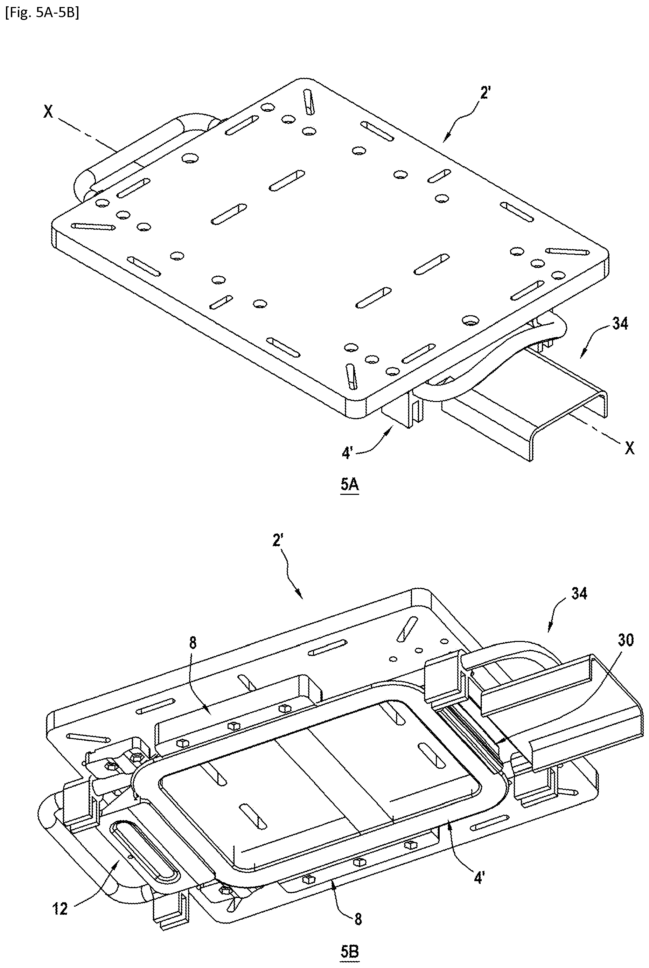

De même, il est possible d'envisager que la plaque qui est destinée à être solidaire du porte-bagage du véhicule (à savoir la plaque mâle ou la plaque femelle) fasse partie intégrante du porte-bagage (cette variante de réalisation est représentée sur les figures 5A et 5B décrites ultérieurement).

De plus, en l'absence de porte bagage, il est possible d'envisager que la plaque destinée à être solidaire du véhicule soit reliée directement à celui-ci, par exemple à la potence de selle dans le cas d'un vélo.

En liaison avec les figures 1A et 1B, on décrira maintenant un exemple de réalisation d'une plaque femelle 2 du dispositif de fixation selon l'invention.

Dans cet exemple de réalisation, la plaque femelle 2 se présente sous la forme d'une pièce rectangulaire, aplatie et de relativement faible épaisseur. Elle possède une face inférieure 2a - également appelée face d'emboîtement (visible sur la figure 1B) - et une face supérieure 2b (visible sur la figure 1A) opposée à la face inférieure.

De forme rectangulaire, la plaque femelle 2 possède deux grands côtés 6a opposés qui sont par exemple destinés à être positionnés selon un axe principal X-X du véhicule, et deux petits côtés 6b opposés.

Au niveau de sa face supérieure 2b, la plaque femelle 2 présente un certain nombre de perçages 7 destinés notamment à permettre une fixation de l'accessoire à transporter par exemple au moyen de vis, de sangles ou de tout autre moyen.

Au niveau de sa face d'emboîtement 2a, la plaque femelle 2 comprend au moins deux guides latéraux 8 qui sont positionnés en saillie le long de ses grands côtés opposés 6a. Ces guides latéraux 8 sont chacun munis d'un plan incliné 10 de façon à définir avec la face d'emboîtement de la plaque femelle un profil d'emboîtement femelle.

Il est à noter que le nombre de guides latéraux pourrait être différent de deux. De même, ces guides latéraux pourraient alternativement être positionnés le long des petits côtés 6b de la plaque femelle.

Par ailleurs, les plans inclinés 10 des guides latéraux 8 de la plaque femelle forment chacun avec la face d'emboîtement 2a de la plaque femelle un angle β qui est obtus (c'est-à-dire supérieur à 90°).

La plaque femelle 2 comprend également au niveau de sa face d'emboîtement 2a deux organes de centrage et verrouillage 12 qui sont positionnés en saillie le long de ses petits côtés opposés 6b et qui comprennent chacun une surface plane 14.

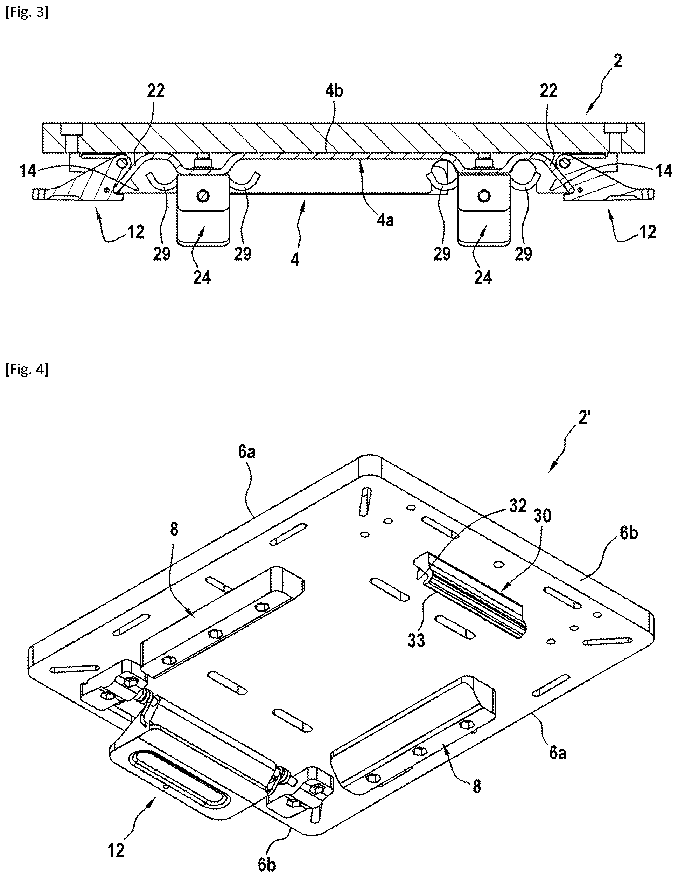

Chaque organe de centrage et verrouillage 12 est mobile entre une position de verrouillage dans laquelle les plaques 2, 4 sont verrouillées l'une sur l'autre avec suppression des jeux (voir la figure 3) et une position de déverrouillage dans laquelle les plaques sont déverrouillées l'une de l'autre (voir la figure 1B).

Par ailleurs, chaque organe de centrage et verrouillage est contraint en position de verrouillage en l'absence d'intervention extérieure.

Dans l'exemple de réalisation des figures 1A et 1B, chaque organe de centrage et verrouillage 12 se présente sous la forme d'une poignée articulée autour d'un axe Y-Y parallèle aux petits côtés 6b de la plaque femelle et montée sur deux ressorts 16 qui sont réglés de façon à maintenir l'organe de centrage et verrouillage en position de verrouillage lorsque les ressorts sont au repos.

Bien entendu, les organes de centrage et verrouillage pourraient prendre une forme différente. Par exemple, on pourrait envisager qu'ils se présentent sous la forme de pièces déformables plastiquement entre leur position de verrouillage et leur position de déverrouillage. On pourrait également envisager qu'ils soient commandés à distance par une commande déportée.

De même, comme représenté sur la figure 4, un seul organe de centrage et verrouillage mobile pourrait être prévu sur l'une et/ou l'autre plaque.

De préférence, les deux organes de centrage et verrouillage 12 sont reliés mécaniquement l'un à l'autre (par exemple par un câble ou une tige non représentée sur les figures) de façon à ce que l'actionnement manuel de l'un des organes de centrage et verrouillage entraîne automatiquement l'actionnement de l'autre organe de centrage et verrouillage. Ceci permet de faciliter le déverrouillage à une main des plaques entre elles lorsqu'il est nécessaire de décharger l'accessoire.

De préférence également, il peut être prévu un loquet (non représenté sur les figures) apte à bloquer et contraindre le ou les organes de centrage et verrouillage en position de verrouillage afin d'éviter tout déverrouillage intempestif.

En liaison avec les figures 2A et 2B, on décrira maintenant un exemple de réalisation d'une plaque mâle 4 apte à coopérer avec la plaque femelle des figures 1A et 1B.

Dans cet exemple de réalisation, la plaque mâle 4 se présente également sous la forme d'une pièce rectangulaire, aplatie et de relativement faible épaisseur. Elle possède une face inférieure 4a (visible sur la figure 2B) et une face supérieure 4b (visible sur la figure 2A) opposée à la face inférieure et appelée face d'emboîtement.

Comme pour la plaque femelle, la plaque mâle 4 possède deux grands côtés 18a opposés qui sont par exemple destinés à être positionnés selon l'axe principal X-X du véhicule et alignés avec les grands côtés de la plaque femelle, et deux petits côtés 18b opposés.

Au niveau de sa face d'emboîtement 4b, la plaque mâle 4 comprend au moins deux plans inclinés 20 qui sont formés le long de premiers côtés opposés de la plaque (ici le long des grands côtés 18a de la plaque) et qui sont aptes à coopérer chacun avec l'un des plans inclinés 10 des guides latéraux 8 de la plaque femelle 2.

Ces plans inclinés 20 permettent ainsi de former avec la face d'emboîtement 4b un profil d'emboîtement mâle apte à coopérer avec le profil d'emboîtement femelle de la plaque femelle.

Bien entendu, en fonction du nombre de guides latéraux de la plaque femelle, le nombre de plans inclinés de la plaque mâle pourrait être différent. De même, le positionnement de ces plans inclinés pourrait être le long des petits côtés de la plaque mâle (dans le cas où les guides latéraux de la plaque femelle sont positionnés le long des petits côtés).

On notera que, pour permettre un parfait emboîtement des profils d'emboîtement respectifs de la plaque mâle et de la plaque femelle, les plans inclinés 20 de la plaque mâle forment chacun avec la face d'emboîtement de celle-ci un angle γ qui est obtus et qui correspond sensiblement à l'angle β que forment les plans inclinés 10 des guides latéraux 8 de la plaque femelle chacun avec la face d'emboîtement 2a de celle-ci.

Au niveau de sa face d'emboîtement 4b, la plaque mâle 4 comprend également deux plans inclinés 22 formés le long de ses petits côtés 18b, ces plans inclinés 22 formant chacun un angle obtus δ avec la face d'emboîtement de la plaque mâle.

Par ailleurs, ces plans inclinés sont aptes à coopérer chacun par contact avec la surface plane 14 des organes de centrage et verrouillage 12 lorsque ces derniers sont en position de verrouillage. Lorsque les organes de centrage et verrouillage 12 sont en position de déverrouillage, leur surface plane 14 respective est totalement découplée (i.e. sans aucun contact) avec les plans inclinés 22 de la plaque mâle.

Ainsi, en même temps que l'utilisateur emboîte les profils d'emboîtement respectifs de la plaque mâle et de la plaque femelle entre eux, les organes de centrage et verrouillage 12 se verrouillent automatiquement (du fait de la présence des ressorts 16) de façon à assurer un centrage et un verrouillage des plaques entre elles.

On notera que le nombre et l'emplacement des plans inclinés de la plaque mâle dépendent du nombre et de l'emplacement des organes de centrage et verrouillage et des guides latéraux de centrage de la plaque femelle.

Dans l'exemple de réalisation des figures 1A-1B, 2A-2B, 3 et 4 dans lequel la plaque mâle 4 est destinée à être montée sur le porte-bagage du véhicule, la face inférieure 4a de cette plaque comprend en outre des moyens de fixation sur le porte-bagage du véhicule.

Par exemple, comme représenté sur la figure 2B, ces moyens de fixation peuvent comprendre deux groupes de pattes montés sous la face d'emboîtement de la plaque male et destinés à coopérer avec des tubes du porte-bagage du véhicule (non représentés sur les figures) afin d'assurer une fixation de la plaque mâle sur celui-ci.

A cet effet, chaque groupe de pattes comprend deux pattes 24 qui sont positionnées le long des grands côtés 18a opposés de la plaque et qui sont reliées entre elles par une vis 26 permettant de régler l'écartement entre les pattes.

Chaque patte 24 est par ailleurs fixée à la plaque 4 par l'intermédiaire de vis de serrage 28 accessibles depuis la face d'emboîtement de la plaque mâle et pouvant se déplacer dans une rainure 30.

On notera que les pattes de ces moyens de fixation de la plaque peuvent comprendre en outre des moyens pour permettre la fixation d'autres accessoires sur la plaque mâle. Par exemple, ces moyens peuvent se présenter sous la forme de griffes supplémentaires 29 permettant la fixation d'autres accessoires par serrage entre les griffes supplémentaires 29 et la face inférieure 4a de la plaque mâle. Alternativement, cette fixation d'autres accessoires sur la plaque mâle peut être réalisée par serrage (ou pincement) directement entre le corps de la patte 24 et la plaque mâle au niveau de la vis de serrage 28 et de la rainure 30.

La fixation amovible d'un accessoire sur le porte-bagage d'un véhicule au moyen du dispositif selon l'invention tel que décrit précédemment est obtenue de la façon suivante.

Dans un premier temps, la plaque mâle 4 est montée sur le porte-bagage du véhicule au moyen des groupes de pattes 24 et des vis de serrage 26 et 28.

L'utilisateur vient alors se saisir de la plaque femelle 2 (sur laquelle est fixée l'accessoire à transporter ou faisant partie intégrante de cet accessoire) et vient en aveugle positionner celle-ci sur la plaque mâle. La présence des guides latéraux 8 munis de plans inclinés 10 sur la face d'emboîtement de la plaque femelle et des organes de centrage et verrouillage permet d'assurer un centrage automatique de la plaque femelle sur la plaque mâle, sans que l'utilisateur n'ait besoin d'avoir un visuel sur les faces d'emboîtement des deux plaques.

Une fois les plaques correctement positionnées l'une par rapport à l'autre, les organes de centrage et verrouillage 12 de la plaque femelle s'écartent de leur position de verrouillage par contact entre leur surface plane 14 et les plans inclinés 22 formés le long des petits côtés 18b de la plaque mâle. Quand les faces d'emboitement respectives des plaques sont parfaitement emboîtées l'une sur l'autre (voir la figure 3), les organes de centrage et verrouillage 12 se verrouillent automatiquement sous l'effet des ressorts 16, assurant ainsi un verrouillage des plaques entre elles avec une suppression et/ou reprise des jeux.

En liaison avec les figures 4, 5A et 5B, on décrira maintenant différentes variantes de réalisation du dispositif selon l'invention.

La figure 4 représente une variante de réalisation de la plaque femelle 2' dans laquelle celle-ci ne comporte qu'un seul organe de centrage et verrouillage mobile 12 positionné en saillie le long de l'un de ses deux petits côtés opposés 6b.

Le long de son autre petit côté 6b, la plaque femelle 2' comprend, à la place d'un organe de centrage et verrouillage mobile, un organe de centrage et verrouillage fixe comprenant un guide transversal 30 muni d'un plan incliné 32 qui est destiné à coopérer avec le plan incliné formé le long du petit côté correspondant de la plaque mâle et qui se termine par un rebord 33 formant crochet de verrouillage.

Les figures 5A et 5B représentent une autre variante de réalisation du dispositif selon l'invention dans lequel la plaque mâle 4' fait partie intégrante du porte-bagage 34 du véhicule.

Plus précisément, ces figures montrent la plaque femelle 2' (correspondant par exemple à la plaque femelle de la figure 4 avec un seul organe de centrage et verrouillage 12 et un guide transversal 30) qui est fixée sur la plaque mâle 4', cette dernière étant directement intégrée au porte-bagage 34 du véhicule. A cet effet, la plaque mâle 4' dans cette version intégrée comprend l'ensemble des caractéristiques techniques décrites précédemment en liaison notamment avec les figures 2A et 2B.

Par ailleurs, dans les exemples de réalisation décrits précédemment, les organes de centrage et verrouillage des plaques entre elles sont montés sur la plaque femelle.

Bien entendu, il est possible d'envisager une configuration dans laquelle ces organes de centrage et verrouillage soient positionnés au niveau de la plaque mâle, par exemple au niveau des petits côtés de celle-ci. Par exemple, ces organes de centrage et verrouillage peuvent se présenter sous la forme de volets pivotant qui sont montés sur ressorts et qui sont actionnés par l'intermédiaire d'une sangle (ou autre) pour permettre leur déverrouillage.

## Revendications

1. Dispositif pour la fixation amovible d'un accessoire sur un véhicule léger, comprenant une plaque destinée à être solidaire du véhicule et une autre plaque sur laquelle est destiné à être solidarisé l'accessoire, les plaques étant aptes à être fixées l'une sur l'autre de façon amovible,
- l'une des plaques dite plaque femelle (2 ; 2') comprenant :
∘ au moins deux guides latéraux de centrage (8) positionnés en saillie sur une face d'emboîtement (2a) de la plaque le long de deux premiers côtés (6a) opposés de celle-ci, les guides latéraux étant chacun muni d'un plan incliné (10) de façon à définir avec la face d'emboîtement de la plaque un profil d'emboîtement femelle, et
- l'autre plaque dite plaque mâle (4 ; 4') comprenant :
∘ au moins deux plans inclinés (20) formés le long de premiers côtés (18a) opposés de la plaque de façon à former avec une face d'emboîtement (4b) de la plaque un profil d'emboîtement mâle apte à coopérer avec le profil d'emboîtement femelle de la plaque femelle, chaque plan incliné (20) étant apte à coopérer avec un plan incliné (10) des guides latéraux de centrage de la plaque femelle ;
- le dispositif étant **caractérisé en ce qu'**il comprend en outre un système de centrage et de verrouillage mécanique et automatique comprenant :
∘ au moins deux organes de centrage et verrouillage (12) comprenant chacun une surface plane (14) et positionnés le long de seconds côtés (6b) de l'une et/ou de l'autre plaque et dont au moins l'un est mobile entre une position de verrouillage dans laquelle les plaques sont verrouillées l'une sur l'autre avec suppression des jeux et une position de déverrouillage dans laquelle les plaques sont déverrouillées l'une de l'autre, l'organe de centrage et verrouillage mobile étant contraint en position de verrouillage en l'absence d'intervention extérieure ; et
∘ au moins deux plans inclinés (22) formés le long de seconds côtés (18b) de l'une et/ou de l'autre plaque et aptes chacun à coopérer par contact avec la surface plane de l'organe de centrage et verrouillage (12) associé de façon à assurer de façon concomitante un centrage et un verrouillage des plaques entre elles, la surface plane de l'organe de centrage et verrouillage mobile étant découplée du plan incliné associé lorsque l'organe de centrage et verrouillage mobile est en position de déverrouillage.

2. Dispositif selon la revendication 1, dans lequel les plans inclinés (10) des guides latéraux (8) de la plaque femelle (2) forment chacun un angle obtus (β) avec la face d'emboîtement (2a) de la plaque femelle et les plans inclinés (20) de la plaque mâle (4) forment chacun un angle obtus (γ) avec la face d'emboîtement (4a) de la plaque mâle.

3. Dispositif selon l'une des revendications 1 et 2, dans lequel chaque plan incliné (22) du système de centrage et de verrouillage mécanique et automatique forme un angle obtus (δ) avec la face d'emboîtement de la plaque sur laquelle il est formé.

4. Dispositif selon l'une quelconque des revendications 1 à 3, dans lequel chaque plaque (2, 4) présente une forme sensiblement rectangulaire avec deux grands côtés (6a, 18a) destinés à être positionnés selon un axe principal (X-X) du véhicule, les guides latéraux (8) de la plaque femelle (2) étant positionnés parallèlement aux grands côtés ou aux petits côtés (6b) de ladite plaque femelle, et les organes de centrage et verrouillage (12) étant positionnés parallèlement aux autres côtés de l'une et/ou de l'autre plaque.

5. Dispositif selon l'une quelconque des revendications 1 à 4, dans lequel le système de centrage et de verrouillage mécanique et automatique comprend deux organes de centrage et verrouillage mobiles (12) positionnés le long des seconds côtés opposés de l'une et/ou de l'autre plaque, chaque organe de centrage et verrouillage mobile étant monté sur ressort (16) réglé de façon à le maintenir en position de verrouillage lorsque le ressort est au repos.

6. Dispositif selon la revendication 5, dans lequel les deux organes de centrage et verrouillage mobiles (12) sont reliés mécaniquement l'un à l'autre de façon à ce que l'actionnement manuel de l'un des organes de centrage et verrouillage entraîne l'actionnement de l'autre organe de centrage et verrouillage.

7. Dispositif selon l'une quelconque des revendications 1 à 6, dans lequel la plaque mâle (4) est destinée à être montée sur un porte-bagage du véhicule et la plaque femelle (2 ; 2') est destinée à recevoir l'accessoire.

8. Dispositif selon l'une quelconque des revendications 1 à 7, dans lequel la plaque (4) destinée à être solidaire du véhicule comprend en outre des moyens de fixation sur le véhicule, ces moyens de fixation comprenant au moins un groupe de pattes destinées à coopérer avec des tubes du véhicule et montées sous une face (4a) de la plaque opposée à sa face d'emboîtement (4a), le groupe de pattes comprenant deux pattes (24) positionnées sur des premiers côtés (18a) opposés de la plaque et reliées entre elles par une vis (26) permettant de régler l'écartement entre les pattes, chaque patte étant actionnable par l'intermédiaire d'une vis (28) accessible depuis la face d'emboîtement de la plaque.

9. Dispositif selon la revendication 8, dans lequel les pattes des moyens de fixation de la plaque comprennent en outre des moyens (29) pour permettre la fixation d'autres accessoires sur la plaque.

10. Dispositif selon l'une quelconque des revendications 1 à 6, dans lequel l'une des plaques (4') fait partie intégrante d'un porte-bagage du véhicule et/ou l'autre plaque fait partie intégrante de l'accessoire.

11. Dispositif selon l'une quelconque des revendications 1 à 10, dans lequel le système de centrage et de verrouillage automatique et mécanique comprend en outre un loquet qui est apte à bloquer et contraindre le ou les organes de centrage et verrouillage en position de verrouillage.

## Patentansprüche

1. **Vorrichtung** zur lösbaren Befestigung eines Zubehörteils an einem leichten Fahrzeug, umfassend eine Platte, die ausgelegt ist, um fest mit dem Fahrzeug verbunden zu sein, und eine andere Platte, die dazu ausgelegt ist, dass das Zubehörteil darauf fest verbunden ist, wobei die Platten dazu geeignet sind, auf lösbare Weise aufeinander befestigt zu sein,
- wobei eine der Platten, bezeichnet als Buchsenplatte (2; 2'), Folgendes umfasst:
∘ mindestens zwei seitliche Zentrierführungen (8), die vorspringend auf einer Eingriffsfläche (2a) der Platte entlang den zwei gegenüberliegenden ersten Seiten (6a) derselben positioniert sind, wobei die seitlichen Führungen jeweils mit einer geneigten Ebene (10) ausgestattet sind, um mit der Eingriffsfläche der Platte ein Buchseneingriffsprofil zu definieren, und
- die andere Platte, bezeichnet als Steckplatte (4; 4') Folgendes umfasst:
∘ mindestens zwei geneigte Flächen (20), die entlang der ersten gegenüberliegenden Seiten (18a) der Platte gebildet sind, um mit einer Eingriffsfläche (4b) der Platte ein Steckeingriffsprofil zu bilden, das ausgelegt ist, um mit dem Buchseneingriffsprofil der Buchsenplatte zusammenzuarbeiten, wobei jede geneigte Ebene (20) dazu geeignet ist, um mit einer geneigten Ebene (10) der seitlichen Zentrierführungen der Buchsenplatte zusammenzuarbeiten;
- wobei die Vorrichtung **dadurch gekennzeichnet ist, dass** sie außerdem ein mechanisches und automatisches System zur Zentrierung und Verriegelung umfasst, umfassend:
∘ **mindestens** zwei Organe zur Zentrierung und Verriegelung (12), umfassend jeweils eine ebene Fläche (14) und positioniert entlang von zweiten Seiten (6b) der einen und/oder der anderen Platte, und von denen mindestens die eine zwischen einer Verriegelungsposition, in der die Platten eine auf der anderen bei Unterdrückung der Spiele verriegelt sind, und einer Entriegelungsposition, in der die Platten eine von der anderen entriegelt sind, beweglich ist, wobei das bewegliche Organ zur Zentrierung und Verriegelung bei Abwesenheit eines äußeren Eingriffs in die Verriegelungsposition gezwungen ist; und
∘ mindestens zwei geneigte Ebenen (22), die entlang von zweiten Seiten (18b) der einen und/oder der anderen Platte gebildet und jeweils geeignet sind, durch Kontakt mit der ebenen Fläche des Organs zur Zentrierung und Verriegelung (12) zusammenzuarbeiten, das derart zugewiesen ist, dass es auf begleitende Weise eine Zentrierung und eine Verriegelung der Platten untereinander sicherstellt, wobei die ebene Fläche des beweglichen Organs zur Zentrierung und Verriegelung von der zugewiesenen geneigten Fläche entkoppelt ist, wenn das bewegliche Organ zur Zentrierung und Verriegelung in der Entriegelungsposition ist.

2. Vorrichtung nach Anspruch 1, wobei die geneigten Ebenen (10) der seitlichen Führungen (8) der Buchsenplatte (2) jeweils einen stumpfen Winkel (β) mit der Eingriffsseite (2a) des Buchsenplatte bilden und die geneigten Ebenen (20) der Steckplatte (4) jeweils einen stumpfen Winkel (γ) mit der Eingriffsseite (4a) der Steckplatte bilden.

3. Vorrichtung nach einem der Ansprüche 1 und 2, wobei jede geneigte Ebene (22) des mechanischen und automatischen Systems zur Zentrierung und Verriegelung einen stumpfen Winkel (δ) mit der Eingriffsseite der Platte, auf der sie gebildet wird, bildet.

4. Vorrichtung nach einem der Ansprüche 1 bis 3, wobei jede Platte (2, 4) eine im Wesentlichen rechtwinklige Form mit zwei großen Seiten (6a, 18a) bildet, die ausgelegt sind, um gemäß einer Hauptachse (X-X) des Fahrzeugs positioniert zu sein, wobei die seitlichen Führungen (8) der Buchsenplatte (2) parallel zu den großen Seiten oder zu den kleinen Seiten (6b) der Buchsenplatte positioniert sind, und wobei die Organe zur Zentrierung und Verriegelung (12) parallel zu den anderen Seiten der einen und/oder der anderen Platte positioniert sind.

5. Vorrichtung nach einem der Ansprüche 1 bis 4, wobei das mechanische und automatische System zur Zentrierung und Verriegelung zwei bewegliche Organe zur Zentrierung und Verriegelung (12) umfasst, die entlang der zweiten gegenüberliegenden Seiten der einen und/oder der anderen Platte positioniert sind, wobei jedes bewegliche Organ zur Zentrierung und Verriegelung auf einer Feder (16) montiert ist, die derart eingestellt ist, dass es in der Verriegelungsposition gehalten wird, wenn die Feder in Ruhestellung ist.

6. Vorrichtung nach Anspruch 5, wobei die zwei beweglichen Organe zur Zentrierung und Verriegelung (12) mechanisch miteinander verbunden sind, so dass die manuelle Betätigung eines der Organe zur Zentrierung und Verriegelung die Betätigung des anderen Organs zur Zentrierung und Verriegelung mit sich bringt.

7. Vorrichtung nach einem der Ansprüche 1 bis 6, wobei die Steckplatte (4) ausgelegt ist, um auf einem Gepäckträger des Fahrzeugs montiert zu sein, und die Buchsenplatte (2; 2') ausgelegt ist, um das Zubehör aufzunehmen.

8. Vorrichtung nach einem der Ansprüche 1 bis 7, wobei die Platte (4), die ausgelegt ist, um fest mit dem Fahrzeug verbunden zu sein, außerdem Mittel zur Befestigung auf dem Fahrzeug umfasst, wobei diese Mittel zur Befestigung mindestens eine Gruppe von Füssen umfasst, die ausgelegt sind, um mit Rohren des Fahrzeugs zusammenzuarbeiten, und unter einer Fläche (4a) der Platte gegenüber ihrer Eingriffsseite (4a) montiert sind, wobei die Gruppe von Füssen zwei Füße (24) umfasst, die auf ersten Seiten (18a) gegenüber der Platte positioniert sind und untereinander durch eine Schraube (26) verbunden sind, die ermöglicht, den Abstand zwischen den Füßen einzustellen, wobei jeder Fuß mit Hilfe einer Schraube (28) betätigt werden kann, die von der Eingriffsfläche der Platte aus zugänglich ist.

9. Vorrichtung nach Anspruch 8, wobei die Füße der Mittel zur Befestigung der Platte außerdem Mittel (29) umfassen, um die Befestigung anderer Zubehörteile auf der Platte zu ermöglichen.

10. Vorrichtung nach einem der Ansprüche 1 bis 6, wobei die eine der Platten (4') einen integralen Teil eines Gepäckträgers des Fahrzeugs darstellt und/oder die andere Platte einen integralen Teil des Zubehörs darstellt.

11. Vorrichtung nach einem der Ansprüche 1 bis 10, wobei das mechanische und automatische System zur Zentrierung und Verriegelung außerdem ein Schnappschloss umfasst, das ausgelegt ist, um das oder die Organe zur Zentrierung und Verriegelung in die Verriegelungsposition zu blockieren und zu zwingen.

## Claims

1. A device for the removable attachment of an accessory to a vehicle, comprising one plate intended to be rigidly connected to the vehicle and another plate to which the accessory is intended to be rigidly connected, the plates being able to be removably attached to one another,
- one of the plates, referred to as the female plate (2; 2') comprising:
∘ at least two lateral centring guides (8) positioned projecting on an interlocking face (2a) of the plate along two first opposite sides (6a) thereof, the lateral guides each being provided with an inclined plane (10) so as to define, with the interlocking face of the plate, a female interlocking profile, and
- the other plate, referred to as the male plate (4; 4') comprising:
∘ at least two inclined planes (20) formed along first opposite sides (18a) of the plate, so as to form, with an interlocking face (4b) of the plate, a male interlocking profile capable of cooperating with the female interlocking profile of the female plate, each inclined plane (20) being capable of cooperating with an inclined plane (10) of the lateral centring guides of the female plate;
- the device further comprising a mechanical and automatic centring and locking system comprising:
∘ at least two centring and locking members (12) comprising a flat surface (14) positioned along second sides (6b) of one and/or the other plate and at least one of which is movable between a locked position, in which the plates are locked together while eliminating play, and an unlocked position, in which the plates are unlocked from one another, the movable centring and locking member being forced into the locked position in the absence of external intervention; and
∘ at least two inclined planes (22) formed along second sides (18b) of one and/or the other plate and each capable of cooperating by contact with the flat surface of the associated centring and locking member (12), so as to simultaneously ensure centring and locking together of the plates, the flat surface of the movable centring and locking member being decoupled from the inclined planes when the movable centring and locking member is in the unlocked position.

2. The device according to claim 1, wherein the inclined planes (10) of the lateral guides (8) of the female plate (2) each form an obtuse angle (β) with the interlocking face (2a) of the female plate, and the inclined planes (20) of the male plate (4) each form an obtuse angle (γ) with the interlocking face (4a) of the male plate.

3. The device according to one of claims 1 and 2, wherein each inclined plane (22) of the mechanical and automatic centring and locking system forms an obtuse angle (δ) with the interlocking face of the plate on which it is formed.

4. The device according to any one of claims 1 to 3, wherein each plate (2, 4) has a substantially rectangular shape with two large sides (6a, 18a) intended to be positioned along a main axis (X-X) of the vehicle, the lateral guides (8) of the female plate (2) being positioned parallel to the large sides or to the small sides (6b) of said female plate, and the centring and locking members (12) being positioned parallel to the other sides of one and/or the other plate.

5. The device according to any one of claims 1 to 4, wherein the mechanical and automatic centring and locking system comprises two movable centring and locking members (12) positioned along the seconds opposite sides of one and/or the other plate, each centring and locking mobile member being mounted on a spring (16) adjusted so as to keep it in the locked position when the spring is at rest.

6. The device according to claim 5, wherein the two movable centring and locking members (12) are mechanically connected to one another so that the manual operation of one of the centring and locking members causes the operation of the other centring and locking member.

7. The device according to any one of claims 1 to 6, wherein the male plate (4) is intended to be mounted on a luggage rack of the vehicle and the female plate (2; 2') is intended to receive the accessory.

8. The device according to any one of claims 1 to 7, wherein the plate (4) intended to be rigidly connected to the vehicle further comprises means for attachment to the vehicle, these attachment means comprising at least one group of tabs intended to cooperate with tubes of the vehicle and mounted under one face (4a) of the plate opposite its interlocking face (4a), the group of tabs comprising two tabs (24) positioned on first opposite sides (18a) of the plate and connected to one another by a screw (26) for adjusting the spacing between the tabs, each tab being operable by means of a screw (28) accessible from the interlocking face of the plate.

9. The device according to claim 8, wherein the tabs of the attachment means of the plate further comprise means (29) for enabling the attachment of other accessories to the plate.

10. The device according to any one of claims 1 to 6, wherein one of the plates (4') forms an integral part of a luggage rack of the vehicle and/or the other plate forms an integral part of the accessory.

11. The device according to any one of claims 1 to 10, wherein the automatic and mechanical centring and locking system further comprises a latch which is capable of blocking and forcing the locking member into the locked position.
